Europäisches Patentamt

European Patent Office

Office européen des brevets

(11) Veröffentlichungsnummer : **0 092 033**
**B1**

(12) **EUROPÄISCHE PATENTSCHRIFT**

(45) Veröffentlichungstag der Patentschrift :
10.09.86

(21) Anmeldenummer : 83101431.1

(22) Anmeldetag : 15.02.83

(51) Int. Cl.⁴ : **F 28 F  3/02, F 28 D  1/02**

(54) Verfahren zur Herstellung eines Flachheizkörper.

(30) Priorität : 16.04.82 DE 8210732 U

(43) Veröffentlichungstag der Anmeldung :
26.10.83 Patentblatt 83/43

(45) Bekanntmachung des Hinweises auf die Patenterteilung : 10.09.86 Patentblatt 86/37

(84) Benannte Vertragsstaaten :
AT BE CH DE FR GB IT LI LU NL SE

(56) Entgegenhaltungen :
DE-A- 2 539 856
FR-A-  756 749
FR-A- 1 445 964
FR-A- 2 356 898
GB-A-  781 928
Zeitschrift "Haustechnik, Bauphysik, Umwelttechnik"
1980, S. 193, 229, 233

(73) Patentinhaber : Klostermann, Harald
Pellenberg 30
5750 Menden (DE)

(72) Erfinder : Klostermann, Harald
Pellenberg 30
5750 Menden (DE)

(74) Vertreter : Dörner, Lothar, Dipl.-Ing.
Stresemannstrasse 15
D-5800 Hagen (DE)

Jouve, 18, rue St-Denis, 75001 Paris, France

**Beschreibung**

Die Erfindung bezieht sich auf ein Verfahren zur Herstellung eines Flachheizkörpers mit Lamellen, die sowohl mit wasserführenden Kanälen als auch mit nicht wasserführenden Sicken zwischen den Kanälen des Flachheizkörpers wärmeleitend verbunden sind, wobei die Lamellen in ihrer Stirnansicht nach Art einer Trapezkurve aufgebaut werden, deren äußere Scheitel in derselben Ebene und deren innere Scheitel in unterschiedlichen parallelen Ebenen liegen, von denen die eine durch. die Sicken, die andere durch die zugewandten Außenflächen der Kanäle bestimmt und an die Sicken punktgeschweißt werden.

Mit Lamellen versehene Flachheizkörper der vorgenannten Art sind bekannt (DE-A-2 539 856). Bei ihnen sind die Lamellen sowohl mit den nicht wasserführenden Sicken als auch mit den wasserführenden Kanälen wärmeleitend verbunden, was — bei sonst gleichen geometrischen Parametern — Flachheizkörper mit der größten konvektiven Wärmeleistung ergibt (Kast u. Caspary « Untersuchungen zur Wärmeleistung von indirekten Heizflächen » in « Haustechnik Bauphysik Umwelttechnik » 1980 S. 193, 229, 233). Bei den bekannten Flachheizkörpern sind die Lamellen sowohl mit den Kanälen als auch mit den Sicken verschweißt. Die Herstellung solcher Flachheizkörper ist aufwendig. Mit den verwendeten Schweißmaschinen muß nämlich sowohl auf den wasserführenden Kanälen indirekt als auch auf den Sicken direkt punktgeschweißt werden können. Solche Schweißmaschinen sind in der Anschaffung und Wartung teuer. Bei einer Variante eines Flachheizkörpers der vorgenannten Art (GB-A-781 928) ist jedem Kanal eine Einzellamelle zugeordnet, die im Querschnitt etwa M- oder W-förmig ausgestattet, mit ihrem Mittelteil mit dem Kanal verschweißt und mit ihren freien Schenkeln elastisch gegen die Übergangsbereiche der Wasserkanäle in die Sicken gedrückt ist. Die Herstellung eines solchen Flachheizkörpers ist einmal wegen der Notwendigkeit des indirekten Punktschweißens, zum anderen wegen der Einzelanbringung jeder Lamelle noch aufwendiger.

Danach liegt der Erfindung die Aufgabe zugrunde, ein Verfahren zur Herstellung von Flachheizkörpern der gattungsgemäßen Art zu schaffen, das wirtschaftlich unter Verwendung nur eines direkten Schweißverfahrens arbeitet. Gemäß der Erfindung wird diese Aufgabe dadurch gelöst, daß während des Punktschweißens in den auf den Kanälen aufliegenden Scheiteln eine Vorspannung erzeugt wird.

Zur Herstellung der Flachheizkörper nach der Erfindung sind lediglich Punktschweißmaschinen notwendig, wie sie zur Herstellung von Flachheizkörpern mit Lamellen, die nur an den Sicken anliegen, bekannt sind. Solche Punktschweißmaschinen für die Durchführung direkter Schweißverfahren sind vergleichsweise preiswert und vorhanden. In der Wärmeübertragung erleidet der Flachheizkörper nach der Erfindung dabei keine Einbuße. Die Lamellen liegen nach ihrem Verschweißen mit den Sicken unter Vorspannung an den Kanälen an, wodurch ein inniger Kontakt erreicht wird. Die Wärmeübertragung im Bereich der Kanäle ist bei der Lamelle nach der Erfindung etwa gleich hoch wie bei einer Lamelle, die in diesem Bereich geschweißt ist. Die Herstellung des Flachheizkörpers nach der Erfindung erfolgt also bei gleichem Wärmeverhalten wirtschaftlicher.

Ein Ausführungsbeispiel für einen nach der Erfindung hergestellten Flachheizkörper ist in der Zeichnung dargestellt und wird im folgenden näher beschrieben. Es zeigen :

Figur 1 einen Ausschnitt aus einer schematischen Darstellung eines einreihigen Flachheizkörpers, wobei die Lamellen teilweise perspektivisch dargestellt sind ;

Figur 2 einen Ausschnitt aus einem Horizontalschnitt durch einen zweiteiligen Plattenheizkörper.

Bei einem Plattenheizkörper erfolgt die Führung des Heizmediums z. B. Warmwasser, in vertikal verlaufenden Kanälen 1, die in einen Vor- und Rücklauf des Heizmediums übergehen. Im gewählten Ausführungsbeispiel sind die Kanäle 1 im Querschnitt als Sechseck ausgebildet, die mittleren sich gegenüberliegenden Seiten jedes Sechsecks verlaufen parallel zueinander, sind gleich lang und länger als die übrigen, untereinander gleichen und paarweise zueinander parallelen Seiten. Zwischen benachbarten Kanälen 1 ist je eine parallel verlaufende, die Kanäle trennende Sicke 2 vorgesehen. Die Herstellung der Kanäle 1 und der Sicken 2 erfolgt durch zwei spiegelsymmetrisch gleiche gewellte Bleche, die an den Sicken 2 miteinander verschweißt sind.

Der Flachheizkörper weist außerdem Lamellen 3 auf. Die Lamellen 3 sind sowohl mit den wasserführenden Kanälen 1 als auch mit den nicht wasserführenden Sicken 2 zwischen den Kanälen 1 des Flachheizkörpers wärmeleitend verbunden : Die Lamellen 3 sind an die Sicken 2 punktgeschweißt. Zwei Punktschweißstellen 4 sind beispielsweise in der Zeichnung dargestellt. Gegen die Kanäle 1 sind die Lamellen 3 unter Vorspannung gedrückt gehalten.

In ihrer Stirnansicht sind die Lamellen 3 nach Art einer Trapezkurve aufgebaut, deren äußere Scheitel 31 in derselben Ebene und deren innere Scheitel 32, 33 in unterschiedlichen parallelen Ebenen liegen. Die eine Ebene, in der die Scheitel 32 liegen, ist durch die Sicken 2 ; die andere Ebene, in der die Scheitel 33 liegen, durch die zugewandte Außenfläche 11 der Kanäle 1 bestimmt.

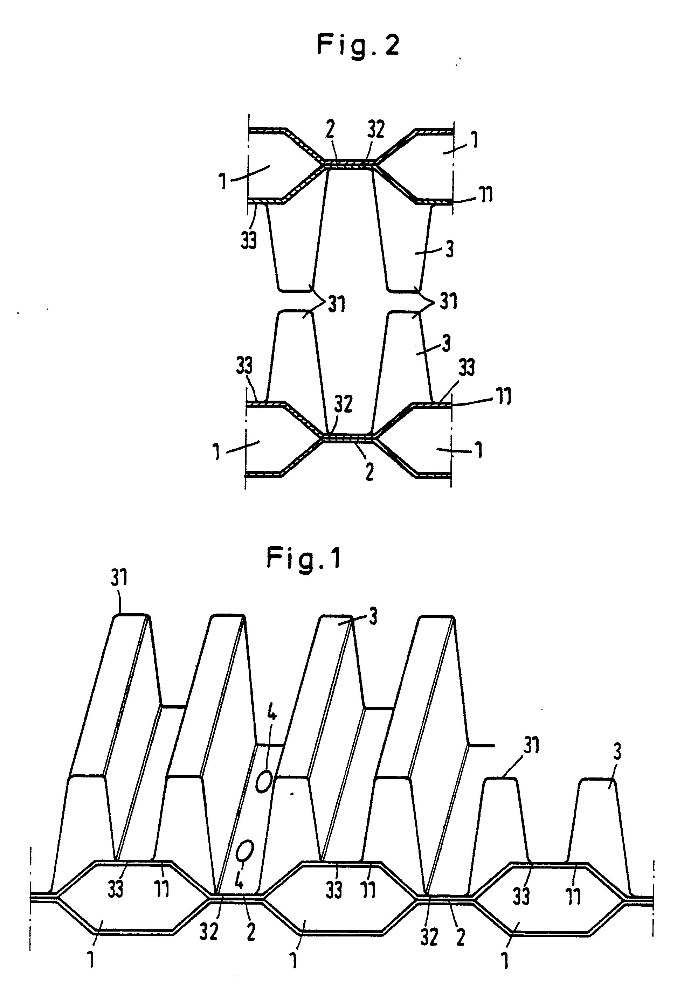

Aus der beschriebenen Anordnung von Kanälen 1, Sicken 2 und Lamellen 3 können einreihige, zweireihige — Fig. 2 — oder mehrreihige Plattenheizkörper gebildet sein, je nachdem ob die Lamellen auf der Vorder- und/oder der Rückseite der die Kanäle 1 und Sicken 2 bildenden Kanalleitbleche befestigt und/oder einander zugewandt angebracht sind.

Bei einer bevorzugten Ausführung des Flachheizkörpers haben sich folgende Abmessungen bewährt: Die Lamellen haben eine Stärke von ca. 0,5 mm. Die Breite jedes äußeren Scheitels beträgt ca. 5 mm, die jedes Scheitels 32 in der Ebene der Sicken 2 ca. 8,5 mm und die jedes Scheitels 33 in der Ebene der Kanäle 1 ca. 7, 5 mm. Dabei beträgt der Abstand der äußeren Scheitel 31 von den Scheiteln 32 in der Ebene der Kanäle ca. 21 mm und von den Scheiteln 32 in der Ebene der Stege ca. 29 mm. Der Trapezöffnungswinkel ist dabei 97°. Bei dem zweireihigen Flachheizkörper nach Fig. 2 weisen außerdem die sich gegenüberliegenden Scheitel 31 der beiden Lamellen 3 einen Abstand von ca. 5 mm bei einem Abstand der einander zugewandten Außenflächen der Kanäle 1 von ca. 47 mm auf.

**Patentanspruch**

Verfahren zur Herstellung eines Flachheizkörpers mit Lamellen (3), die sowohl mit wasserführenden Kanälen (1) als auch mit nicht wasserführenden Sicken (2) zwischen den Kanälen des Flachheizkörpers wärmeleitend verbunden sind, wobei die Lamellen (3) in ihrer Stirnansicht nach Art einer Trapezkurve aufgebaut werden, deren äußere Scheitel (31) in derselben Ebene und deren innere Scheitel (32, 33) in unterschiedlichen parallelen Ebenen liegen, von denen die eine durch die Sicken (2), die andere durch die zugewandten Außenflächen (11) der Kanäle (1) bestimmt und an die Sicken (2) punktgeschweißt werden, dadurch gekennzeichnet, daß während des Punktschweißens in den auf den Kanälen (1) aufliegenden Scheiteln (33) eine Vorspannung erzeugt wird.

**Claim**

Process for the production of a flat heating body with lamellae (3) which are heat conductively connected not only with water-conducting canals (1) but also with non-water-conducting reinforcing fins (2) between the canals of the flat heating body, whereby the lamellae (3), in their end elevational view, are constructed in the manner of a trapezoidal curve, the outer apices (31) of which lie in the same plane and the inner apices (32, 33) of which lie in different parallel planes, of which one is determined by the reinforcing fins (2), the other by the facing outer surfaces (II) of the canals (1) and are spot-welded on to the reinforcing fins (2), characterised in that, during the spot welding, a pre-stressing is produced in the apices (33) lying on the canals (1).

**Revendication**

Procédé pour la fabrication d'un élément chauffant plat muni de nervures (3) qui sont jointes de façon à permettre la conduction de la chaleur, tant à des canaux de circulation d'eau (1) qu'à des moulures (2) dans lesquelles ne circule pas·d'eau, disposées entre les canaux, les nervures (3) vues en bout ayant la forme d'une courbe trapézoïdale dont les sommets extérieurs (31) sont situés dans un même plan et dont les sommets intérieurs (32), (33) sont situés dans des plans parallèles différents dont l'un est défini par les moulures (2) et l'autre par les surfaces extérieures (11) des canaux (1) tournées vers ces sommets, caractérisé en ce que pendant le soudage par points, une précontrainte est créée dans les sommets (33) qui reposent sur les canaux (1).

# Fig. 2

# Fig. 1